# EUROPEAN PATENT SPECIFICATION

(11) **EP 4 314 546 B1**
(45) Date of publication and mention of the grant of the patent: **10.07.2024**
(21) Application number: 22727101.2
(22) Date of filing: 03.05.2022
(51) Int. Cl.: F03D 7/02

(54) **REDUCING SEISMIC LOADS THAT ACT ON A WIND TURBINE**
VERMINDERUNG SEISMISCHER LASTEN, DIE AUF EINE WINDTURBINE WIRKEN
RÉDUCTION DES CHARGES SISMIQUES AGISSANT SUR UNE ÉOLIENNE

(30) Priority: 18.05.2021 EP 21174331
(43) Date of publication of application: 07.02.2024
(73) Proprietor: Siemens Gamesa Renewable Energy A/S, 7330 Brande (DK)
(72) Inventor: ALBERTS, Johannes Gerhardes Wardjan, 2660 Brøndby Strand (DK); NAVALKAR, Sachin Tejwant, 3051 EV Rotterdam (NL); RAVASIO, Matteo, 1077 TL Amsterdam (NL); DE WINTER, Cornelia, 2614 CH Delft (NL)
(74) Representative: SGRE-Association
(86) International application number: PCT/EP2022/061809
(87) International publication number: WO 2022/243023

(56) References cited:
- EP-A1- 2 589 800
- WO-A1-2022/243023
- WO-A2-2010/083835
- DE-A1- 102018 132 413
- US-A1- 2011 293 418

## Description

### Field of invention

The present invention relates to the technical field of wind turbines. The present invention relates in particular to a wind turbine with a seismic event control device. The present invention further relates to a method of reducing seismic load acting on a wind turbine. Furthermore, the present invention relates to a specific use of blade pitch actuation.

### Art Background

It may be considered as a common practice to establish wind turbines within especially windy environment, e.g. off-shore, in order to yield an efficient power production. However, some of these environments are regions of high seismic activity, for example in the Asia-Pacific region. The response of a wind turbine and its support structure to a seismic event, when there is a certain probability of seismic events, may thus have to be evaluated such that upcoming seismic loads can be determined.

Depending on local regulations, it may have to be even proven that a wind turbine structure is able to satisfy the following criteria:
i) No damage criterion: this condition requires that the seismic loads do not exceed the material yield strength of any load-bearing component. For countries like Japan, it is expected that the wind turbine retains structural integrity for seismic events of low severity.
ii) No collapse criterion: This condition permits local exceedances of material yield strength in load-bearing components. However, it requires that the ultimate strength of materials is not exceeded, and there is no detachment or catastrophic failure of any load-bearing component. For countries like Japan, it is expected that the wind turbine satisfies the no collapse criterion for extremely rare seismic events (return period 475 years), of moderate to high severity.

For a typical offshore wind turbine located in the Asia-Pacific region, including Japan, Korea, and Taiwan, the danger of seismic loads may often drive the wind turbine design, since seismic loads can be significantly higher than non-seismic loads for the wind turbine tower and support structure. Accordingly, satisfying seismic requirements may require an increase in tower and support structure costs, which may lead to economic infeasibility for a wind turbine project. Further, high seismic loads occurring in the blades or other nacelle (RNA) components may render a prospective site or turbine type technically infeasible for offshore sites in this region.

When an earthquake occurs, the wind turbine support structure is subjected to seismic accelerations that are transferred through the bedrock and the soil layers (of the ground) to the support structure. One of the most challenging problems with high seismic loads may occur, when the frequency content of these seismic accelerations coincides with one of the structural frequencies of the wind turbine and support structure. This "resonance" may cause significant vibrations and hence critical loads in one or more of the turbine structural components (for example, a blade may break off).

In order to reduce seismic load on a wind turbine, the conventional approach is to alter the design of the wind turbine support structure, so as to avoid seismic frequencies that may excite turbine structural modes.

However, this approach may have many drawbacks since it produces high additional costs. Further, it may not be used in case seismic frequencies excite RNA structural modes, because RNA redesign is generally not possible for site-specific load calculations.

US 2011/0293418 A1 describes a device and a method for controlling a wind turbine, in particular a shut-down sequence.

DE 10 2018 132 413 A1 describes a method for determining different vibrations of a wind energy plant.

WO 2010/083835 A2 describes a wind turbine with a warning system.

EP 2 589 800 A1 describes a windmill pitch control device.

There may be a need for providing a wind turbine that can be operated in a robust and stable manner even during a seismic event.

### Summary of the Invention

This need may be met by the subject matter according to the independent claims. Advantageous embodiments of the present invention are described by the dependent claims.

According to a first aspect of the invention, there is provided a wind turbine comprising:
i) a tower;
ii) a wind rotor, which is arranged at a top portion of the tower and which comprises at least one blade, in particular three blades, wherein the at least one blade is arranged in a first blade pitch position (normal blade position), in particular a first blade pitch angle; and
iii) a seismic event control device, configured to actuate (as a seismic event response) the at least one blade from the first blade pitch position to a second blade pitch position (seismic load mitigated blade position), in particular a second blade pitch angle, being different from the first blade pitch position, to thereby reduce seismic load acting on the wind turbine.

Hereby, a) a first blade edge resonant frequency of the first blade pitch position is closer to a dominant seismic event resonant frequency than a second blade edge resonant frequency of the second blade pitch position and/or b) the first blade pitch position is a non energy production position, and the second blade pitch position is an energy production position.

According to a second aspect of the invention, a method is provided of reducing seismic load acting on a wind turbine during a seismic load causing event, in particular an earthquake, wherein the wind turbine comprises a tower and a wind rotor, which is arranged at a top portion of the tower and which comprises at least one blade, wherein the at least one blade is arranged in a first blade pitch position. The method comprising:
i) obtaining an information indicative of a seismic load causing event, for example an earthquake alert; and, in particular subsequently,
ii) actuating the at least one blade from the first blade pitch position to a second blade pitch position, being different from the first blade pitch position.

Hereby, a) a first blade edge resonant frequency of the first blade pitch position is closer to a dominant seismic event resonant frequency than a second blade edge resonant frequency of the second blade pitch position and/or b) the first blade pitch position is a non energy production position, and the second blade pitch position is an energy production position.

According to an example to better understand the invention, there is described a use (method of using) a wind turbine blade pitch actuation to reduce seismic load acting on the wind turbine. In particular so that a resonance (coincidence, amplification) of a dominant seismic event resonant frequency and a blade edge resonant frequency is avoided.

According to an example to better understand the invention, there is provided a wind turbine comprising:
i) a tower;
ii) a wind rotor, which is arranged at a top portion of the tower and which comprises at least one blade, in particular three blades; and
iii) a control device, configured to
keep the at least one blade in an energy production blade pitch position during a seismic event, to thereby reduce seismic load acting on the wind turbine.

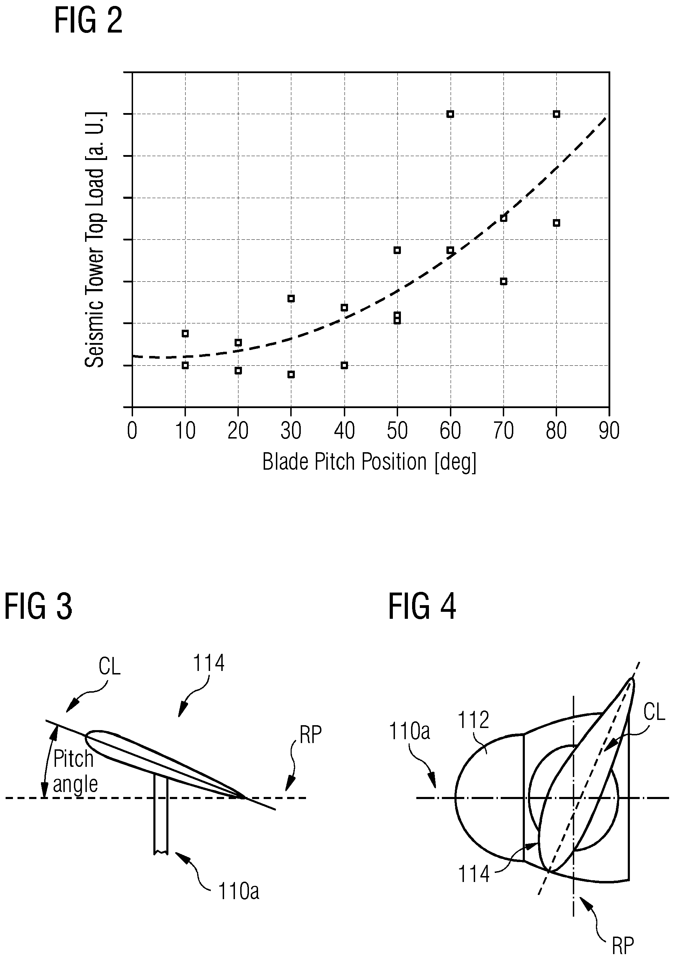

In the context of the present document, the term "blade pitch position" may in particular refer to a "blade pitch angle". The definition of a blade pitch angle is well-known in the field of wind turbines as the angle between the chord line of the blade and the rotational plane of the blade (reference line on the rotor hub). In other words, the blade pitch angle is the angle at which a turbine blade is set with respect to the plane of rotation, i.e. the angle being measured between the rotational plane and a straight line (chord line) from one edge of the blade to the other. This chord line is an imaginary straight line joining the leading edge and trailing edge of the blade (see also Figures 3 and 4 for illustration). The pitch actuation may be for example a hydraulic or an electrical pitch actuation.

In the context of the present document, the term "seismic event" may in particular refer to an event that is associated with a movement of the ground, for example an earthquake. When the seismic event is of a specific strength, it may shake the wind turbine and cause seismic load that leads to damage and malfunction of the wind turbine.

In the context of the present document, the term "seismic event control device" may in particular refer to any device that is configured to take into account seismic event associated/indictive information, when performing a control operation and/or a regulation operation. A seismic event control device may be a processor or a plurality of processors. Further, a seismic event control device may be a control system of a wind turbine or a software implemented on a wind turbine control system. In a specific example, no hardware is added to an existing wind turbine and a seismic event control software is implemented on the wind turbine control device (controller), which then becomes (at least partially) a seismic event control device. A seismic event control device may include a blade pitch adjustment device or may be coupled to a blade pitch adjustment device. In the latter case, the blade pitch adjustment device may control and/or regulate the blade pitch adjustment device, in particular in order to reduce seismic load acting on the wind turbine. The seismic event control device may detect seismic event indicative information itself (e.g. using a detector) or may receive seismic event indicative information from another (external) device.

The seismic event control device may directly actuate the blades (e.g. when the blade pitch position adjustment device is part of the seismic event control device) or trigger an actuation by the blade pitch position adjustment device. In this document, both options are covered by the term "actuate". Further, the seismic control device may preventively adjust the blade pitch positions.

In the context of the present document, the term "information indicative of a seismic event" or "information indicative of a load causing seismic event" may include any information that is related to a current or potential seismic event. In a basic example, the indicative information may be, that the wind turbine is installed in a region with an increased risk of seismic events. In another example, the information may be a seismic alert, for example that the ground starts moving. In a more advanced example, the information may include specific information about the ground properties and how to actuate blade pitch angles accordingly.

According to an exemplary embodiment, the invention may be based on the idea that a wind turbine can be operated in a robust and stable manner, even during a seismic (load causing) event, if the blade pitch angle(s) are actuated in a specific manner so as to reduce the seismic load.

Conventional approaches to reduce seismic loads acting on a wind turbine are in principle limited to structural designs (e.g. a more robust support structure) which are, however, cost-intensive and suboptimal in some regards (e.g. seismic redesign typically necessitates heavier structures).

It has now been observed by the inventors that the highest seismic loads may occur in the wind turbine structure, when the blade pitch positions are in a non energy production regime, for example when forced to stay in the feather position, as would occur at the end of a turbine stop (and/or at extreme wind speeds). Based on this observation, the inventors further found that a surprisingly efficient and robust reduction of seismic load on a wind turbine may be achieved, when the blade pitch positions are optimized in such a manner that the critical seismic loads are reduced to the largest extent possible (for example, by adjusting them to an energy production regime).

The direct consequence of the optimized blade pitch positions may be a reduction of seismic loads on the wind turbine and its support structure. In this manner, the blade pitch position(s) may be (collectively or individually) adjusted in order to alter the wind turbine structural frequency and/or other aeroelastic properties to reduce seismic loads. Further, a change in the blade pitch position may also alter the aerodynamic forces and/or rotational forces on the wind turbine, which may further reduce the load experienced by the wind turbine during a seismic event. In an example, a resonance of an (earthquake) ground frequency (dominant seismic event resonant frequency/frequencies and/or soil/ground layer amplification frequency/frequencies) and a blade frequency (blade edge resonant frequency/frequencies) is avoided by the pitching of the blades.

### Exemplary Embodiments

According to an embodiment, a blade frequency is closer to a seismic event ground frequency in the first blade pitch position than in the second blade pitch position. In other words, a first blade edge resonant frequency of the first blade pitch position is closer to a dominant seismic event resonant frequency than a second blade edge resonant frequency of the second blade pitch. Thus, a blade edge resonant frequency is closer (more similar) to a dominant seismic event resonant frequency (in other words: soil/ground layer amplification frequency) in the first blade pitch position than in the second blade pitch position. Hereby, a first blade edge resonant frequency that occurs at the first blade pitch position may be closer to said dominant seismic event resonant frequency (soil layer amplification frequency) than a second blade edge resonant frequency that occurs at the second blade pitch position. It has been found by the inventors that in this manner a resonance (coincidence, amplification) of the blade (resonance) frequency and the (earthquake) ground amplification frequency may be efficiently reduced.

According to a further embodiment, the first blade pitch position is a non energy production (regime) position, in particular one of the group which consists of: the feather position, the idling position, the turbine stop position, an extreme wind position. It has been found by the inventors that the seismic load acting on a wind turbine may be significantly reduced, when the blade pitch angle is not in the non energy production regime during a seismic event.

The term "non energy production" may refer to an operation state of the wind turbine, wherein (essentially) no electrical energy is produced. In this state, the blade pitch angle is generally higher than 50°, in particular around 90°. The non energy production regime is normally entered, when the wind turbine is in an off-state, in the feather position, or in extreme wind conditions, when the load on the wind turbine is too strong for energy production.

According to a further embodiment, the second blade pitch position is an energy production (regime) position. In turn, it has been found by the inventors that the seismic load acting on a wind turbine may be significantly reduced, when the blade pitch angle is in the energy production regime during a seismic event.

The term "energy production" may refer to an operation state of the wind turbine, wherein electrical energy is produced. This may be done at low and high wind speeds, but not at extreme wind speeds. In order to collect as much wind power as possible, the blade pitch angle is generally lower than 50° in this regime, in particular 30° or lower.

A consequence of the above discussed subject matter may be, that the blade pitch positions of wind turbines in regions of high seismic activity may (essentially) always be in the energy production position in order to be prepared for a potential seismic event.

According to a further specific embodiment, the first blade position may be an energy production (regime) position. According to a further specific embodiment, the second blade position may be a non-energy production (regime) position.

According to a further embodiment, the first blade pitch position is defined by a first blade pitch angle, wherein the second blade pitch position is defined by a second blade pitch angle, and wherein actuating the blade pitch angle of the at least one blade comprises: rotating the at least one blade around an axis being aligned substantially parallel with the longitudinal extension of the at least one blade. By using the blade pitch angles, the blade pitch position may be adjusted in a very accurate manner.

According to a further embodiment, the first blade pitch angle is larger than 50°. According to a further embodiment, the second blade pitch angle is smaller than 50°.

According to a further embodiment, the second blade pitch angle is 30° or lower, in particular 20° or lower.

As described above, the regime over 50° may be considered as a non energy production regime that may be unsuitable for seismic events, while the regime below 50°, in particular below 30° or 20°, may be considered as an energy production regime that may be suitable to enter during seismic events.

In an example, it has been seen that, when the blade pitch angle is close to the conventional passive idling pitch angle, i.e. in the range of 60° to 89°, the tower top seismic load may be extremely high, conventionally only reducible by expensive tower and support structure designs or infeasible nacelle structures. However, if the blade pitch angle is lowered towards around 20°, load reductions of more than 50% may be achievable (see also Figure 2). This load reduction may achieve significant cost reductions, when designing the wind turbine and/or support structure. Further, the efficient reduction in seismic loads may render previously infeasible projects in regions of high seismic activity feasible.

According to a further embodiment, the second blade position is predetermined (a predetermined setpoint). According to a further embodiment, the second blade position is dynamically set (a dynamically computed setpoint). Depending on the present conditions, an advantageous approach can thus be chosen.

According to a further embodiment, the wind turbine comprises two or more, in particular exactly three, blades, and the seismic event control device is configured to actuate (trigger the actuation of) the respective blade pitch angles of the two or more blades collectively or individually. Depending on the respective conditions, it may be more advantageous to control/regulate all blades collectively or each blade individually.

According to a further embodiment, the seismic event control device is configured to obtain an information indicative of a seismic event, in particular before actuating the at least one blade. Thereby, the seismic event control device may efficiently react on a potential seismic event.

According to a further embodiment, the wind turbine further comprises a seismic event detector to detect the information indicative of a seismic event.

According to a further embodiment, the wind turbine is configured to obtain the information indicative of a seismic event from an external seismic event detector.

According to a further embodiment, the wind turbine further comprises a back-up power supply. This may provide the advantage that the wind turbine can be operated in an especially save and robust manner.

If the wind turbine loses access to the grid during a seismic event, it may not be able anymore to actuate the blade pitch position. In such a case, it may be of high advantage to apply an auxiliary or backup power supply source to enable proper functioning of the blade pitch angle actuation.

According to a further embodiment, the actuation (seismic load response) includes a dynamically computed blade pitch position actuation or a predetermined blade pitch position actuation. Depending on the present conditions, an advantageous approach can thus be chosen.

In an exemplary embodiment, adequate knowledge about the expected spectral energy of the seismic event at bedrock and mudline (ground) is assumed. Further, also good knowledge about the turbine structural frequencies and their variation over the blade pitch angle(s) is assumed. Based on the available information, blade pitch positions may be determined (e.g. using aeroelastic turbine simulations) that minimize turbine structural loads, when the turbine is subject to a seismic event. This may be done at a position-specific or at a generic level. These blade pitch positions may be used as default pitch positions. If an earthquake detection system is used, based on external communication, dedicated seismic sensors on the turbine structure or at the turbine site, or using turbine standard signals, such a detection system, may directly trigger the turbine to enter the above-defined blade pitch positions. These blade pitch positions may also be used as the safe pitch positions that the turbine enters, when severe or critical events occur (as determined by the turbine controller (seismic event control device)), in order to ensure that the wind turbine enters a state, where it is least susceptible to seismic-induced loading. The blade pitch positions may be the same for all three blades, or they may be different for each individual blade, for example, to distribute the in-plane and out-of-plane resonance frequencies, and thereby lower resonance effects.

According to a further embodiment, the seismic event control device is further configured to i) obtain information indicative of ground properties, ii) correlate the information indicative of ground properties with respective blade pitch positions, in particular based on operational data, and iii) apply the correlation information for (providing) the actuation. This may provide the advantage that seismic event indicative information can be actively determined and correlated to advantageous blade pitch positions, so that, in a seismic event, preferred blade pitch positions are directly available.

In an exemplary embodiment, perfect knowledge about ground (soil and bedrock) properties is generally difficult to achieve a priori but may not be required in this example. Adequate knowledge about the expected spectral energy of the seismic event may, however, be required. Further, knowledge about the turbine structural frequencies and their variation over the blade pitch angle is assumed. After installation, the wind turbine controller (which includes the seismic event control device) is able to collect further information regarding ground properties either based on operational data (such as the first support structure frequency). The turbine controller may perform dedicated experiments to determine further ground properties. Based on the ground properties determined in situ, blade pitch positions may be defined as the default pitch positions for low wind speeds, or as safe blade pitch positions in case of fault conditions, or in the case of an earthquake detection system (as described in the example above). The ground properties may change over a period of time, in which case the turbine controller may continuously track such properties and update the blade pitch positions accordingly. A lookup table may be generated for use by the turbine controller, a priori (e.g. using aeroelastic turbine simulations) to correlate the measured ground properties with optimal blade pitch positions that minimize the turbine seismic loads. An example of such a look-up table may include a specific turbine eigenfrequency [Hz] and corresponding blade pitch positions for each blade.

According to a further embodiment, the seismic event control device is further configured to i) obtain feedback information, in particular a proxy signal, of a turbine load, and ii) apply the feedback information for (providing/triggering) the actuation. This may provide the advantage that, even though there may be not many seismic event indicative information available, an efficient actuation is enabled that takes into account current turbine load(s) .

In an exemplary embodiment, there is assumed essentially no knowledge of ground (soil and bedrock) properties, seismic spectral energy or turbine structural properties. An earthquake detection system, based on external communication, dedicated seismic sensors, or standard turbine signals may be required. Further, a signal that may serve as a (preferably linear) proxy for critical turbine loads may be used. This specific example may be based on an active pitch control of the seismic event control device that is enabled once a triggering signal is received from the earthquake detection system. The active controller, once enabled, may use the feedback from the turbine load (proxy) signal, and command the pitch position of the blades in such a manner so as to minimize the seismic loads. The control action may be based on a static or a dynamic linear or non-linear transfer function between the (multivariable) feedback load signals and the pitch position actuator. The active controller may command the same position to all three blades actively, or it may perform individual pitch control in order to reduce seismic loads.

According to a further embodiment, the method further comprises: keeping, in particular during a long time period, more in particular during a non-energy production time period, the at least one blade in the second blade position to anticipate upcoming, in particular sudden/ unforeseen/undetectable, seismic events. This may provide the advantage that the seismic load acting on the wind turbine is reduced, even though a seismic event may occur suddenly without time left to further adapt the blade pitch position.

Normally, the blade pitch position is actuated to the first blade pitch position as a "safe"-position in case of non-energy production, grid faults, internal faults, maintenance, or low wind state (in other words: at a stop of the wind turbine). In order to efficiently reduce the seismic load in case of a sudden seismic event, the blade pitch position is, however, kept (in particular most of the time, or (essentially) always) in the second blade pitch position.

According to a further embodiment, there is provided a method of reducing seismic load acting on a wind turbine during a seismic load causing event, in particular an earthquake, wherein the wind turbine comprises a tower and a wind rotor, which is arranged at a top portion of the tower and which comprises at least one blade. The method comprising: keeping the at least one blade in a second blade position to anticipate upcoming seismic events, wherein a blade frequency is closer (more similar) to a seismic event ground frequency in a first blade pitch position, being different from the second blade position, than in the second blade pitch position.

The aspects defined above and further aspects of the present invention are apparent from the examples of embodiment to be described hereinafter and are explained with reference to the examples of embodiment. The scope of the invention is defined by the appended claims.

### Brief Description of the Drawings

- Figure 1: shows a wind turbine in accordance with an Exemplary embodiment of the present invention.
- Figure 2: shows a diagram to illustrate the method of reducing seismic load acting on a wind turbine according to an exemplary embodiment of the invention.
- Figures 3 and 4: illustrate the common definition of the blade pitch angle.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

According to an exemplary embodiment, the following aspect may be taken into account: when a wind turbine is subjected to a seismic event, it may face maximal turbine loads, when the seismic acceleration spectrum excites turbine structural eigenfrequencies. The eigenfrequencies of several wind turbine structural modes, including the first blade mode, depend directly on the blade pitch position. However, the blade pitch position below cut-in wind speed, above cut-out wind speed, and in the operational regime is designed traditionally only to account for maximum power production, and optimal non-seismic turbine loads. This blade pitch position may not be optimal, when the turbine is subjected to seismic loads. As a specific example, at low wind speeds, when maximum seismic loads are experienced, the blades may be in the feather position, which may cause unacceptably high seismic loads.

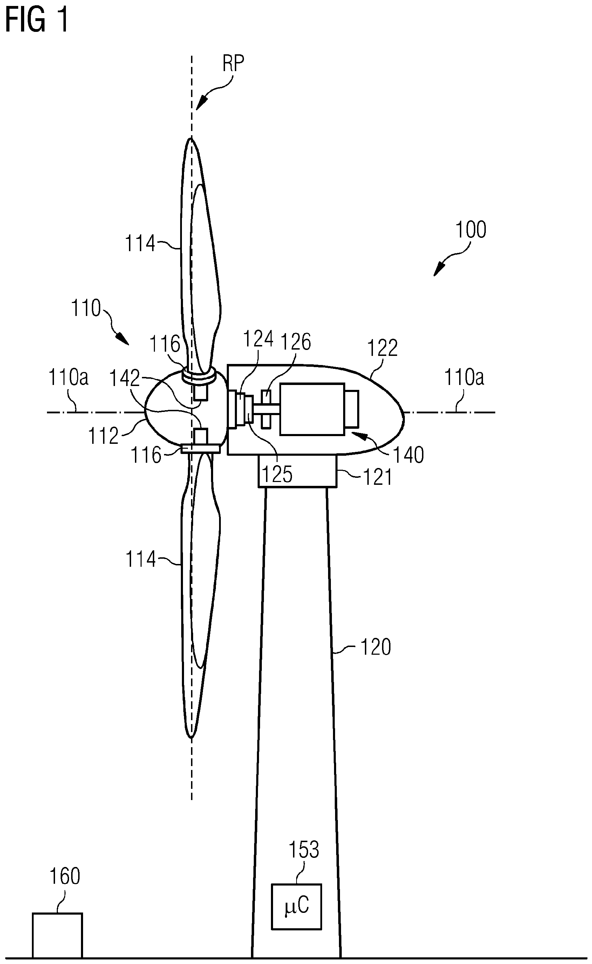

**Figure 1** shows a wind turbine 100 according to an embodiment of the invention. The wind turbine 100 comprises a tower 120 which is mounted on a ground (with a not depicted support structure) in a region, where seismic events such as earthquakes can occur. The wind turbine 100 can be located either onshore or offshore.

On top of the tower 120 there is arranged a nacelle 122. In between the tower 120 and the nacelle 122 there is provided a yaw angle adjustment portion 121 which is capable of rotating the nacelle 122 around a non-depicted vertical axis being aligned with the longitudinal extension of the tower 120. By controlling the yaw angle adjustment portion 121 in an appropriate manner it can be made sure that during a normal operation of the wind turbine 100 the nacelle 122 is always properly aligned with the current wind direction.

The wind turbine 100 further comprises a wind rotor 110 having three blades 114. In the perspective of Figure 1 only two blades 114 are visible. The rotor 110 is rotatable around a rotational axis 110a. The blades 114, which are mounted at a hub 112, extend radially with respect to the rotational axis 110a and rotate within the rotational plane RP.

In between the hub 112 and a blade 114 there is respectively provided a blade pitch angle adjustment device 116 in order to adjust the blade pitch angle of each blade 114 by rotating the respective blade 114 around an axis being aligned substantially parallel with the longitudinal extension of the respective blade 114. By controlling the blade pitch angle adjustment device 116, the blade pitch angle of the respective blade 114 can be adjusted in such a manner that, at least when the wind is not too strong, a maximum wind power can be retrieved from the available mechanical power of the wind driving the wind rotor 110.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to an electromechanical transducer 140. The electromechanical transducer is a generator 140. At this point it is pointed out that the gear box 124 is optional and that the generator 140 may also be directly coupled to the rotor 110 by the shaft 125 without changing the numbers of revolutions. In this case the wind turbine is a so called Direct Drive (DD) wind turbine.

Further, a brake 126 is provided in order to safely stop the operation of the wind turbine 100 or the rotor 110 for instance in case of emergency.

The wind turbine 100 further comprises a control system for operating the wind turbine 100 in a highly efficient manner. Apart from controlling for instance the yaw angle adjustment device 121, the depicted control system is also used for adjusting the blade pitch angle of the rotor blades 114 using actuators 116 in an optimized manner.

The control system includes a seismic event control device 153 configured to actuate the blades 114, respectively, from a first blade pitch position to a second blade pitch position, being different from the first blade pitch position, in order to reduce seismic load acting on the wind turbine 100. In the example shown, the seismic event control device 153 controls/regulates the blade pitch angle adjustment devices 116.

The seismic event control device 153 further obtains information indicative of a seismic event. Said information can be determined by the seismic event control device 153 itself or, as shown in Figure 1, obtained from an external seismic event detection device 160.

**Figure 2** shows a diagram in order to illustrate the method of reducing seismic load acting on a wind turbine using blade pitch angle actuation. The diagram shows a variation of the tower top bending moment as a function of the (collective) blade pitch position. In particular, a simulation has been performed for an offshore wind turbine. Figure 2 shows along the x-axis the blade pitch angle [in °] and along the y-axis the seismic tower top load [in arbitrary units (a.U.)]. It can be seen a reduction in the seismic tower top load (bending moment) as a consequence of the implementation of an actuation of the blade pitch angle. In particular, it can be seen that the seismic load is very high in the non energy production regime and the feather position (around 90°). Also at the idling pitch angle (the range between 60° and 86°), the seismic load is comparably high. In contrast to this, the blade pitch angle of the energy production regime, for example below 30°, in particular below 20°, causes a comparably low seismic load on the tower.

**Figures 3 and 4** illustrate the common definition of the blade pitch angle, being the angle between the chord line CL of the blade 114 with respect to the rotational plane RP of the blade 114. The chord line CL is hereby an imaginary line from the leading edge to the trialing edge of the blade 114.

The scope of the invention is defined by the appended claims.

## Claims

1. A wind turbine (100) comprising:
a tower (120);
a wind rotor (110), which is arranged at a top portion of the tower (120) and which comprises at least one blade (114), wherein the at least one blade (114) is arranged in a first blade pitch position; and
a seismic event control device (153), configured to actuate the at least one blade (114) from the first blade pitch position to a second blade pitch position, being different from the first blade pitch position, in order to reduce seismic load acting on the wind turbine (100); wherein a first blade edge resonant frequency of the first blade pitch position is closer to a dominant seismic event resonant frequency than a second blade edge resonant frequency of the second blade pitch position;
and/or
wherein the first blade pitch position is a non energy production position, and wherein the second blade pitch position is an energy production position.

2. The wind turbine (100) according to claim 1,
wherein the first blade pitch position is the feather position or the idling position.

3. The wind turbine (100) according to any one of the preceding claims,
wherein the first blade pitch position is defined by a first blade pitch angle,
wherein the second blade pitch position is defined by a second blade pitch angle, and
wherein actuating the blade pitch angle of the at least one blade (114) comprises:
rotating the at least one blade (114) around an axis being aligned substantially parallel with the longitudinal extension of the at least one blade (114).

4. The wind turbine (100) according to any one of the preceding claims,
wherein the second blade position is predetermined.

5. The wind turbine (100) according to any one of claims 1 to 3,
wherein the second blade position is dynamically set.

6. The wind turbine (100) according to any one of the preceding claims,
wherein the wind turbine (100) comprises two or more, in particular exactly three, blades (114), and
wherein the seismic event control device (153) is configured to actuate the respective blade pitch angles of the two or more blades (114) collectively or individually.

7. The wind turbine (100) according to any one of the preceding claims, wherein the seismic event control device (153) is configured to
obtain an information indicative of a seismic event, in particular before actuating the at least one blade (114).

8. The wind turbine (100) according to the preceding claims,
wherein the wind turbine (100) further comprises a seismic event detector to detect the information indicative of a seismic event; and/or
wherein the wind turbine (100) is configured to obtain the information indicative of a seismic event from an external seismic event detector.

9. The wind turbine (100) according to any one of the preceding claims, wherein the wind turbine (100) further comprises a back-up power supply.

10. The wind turbine (100) according to any one of the preceding claims, wherein the seismic event control device (153) is further configured to
obtain information indicative of ground properties, and correlate the information indicative of ground properties with respective blade pitch positions, in particular based on operational data, and
apply the correlation information for the actuation.

11. The wind turbine (100) according to any one of the preceding claims, wherein the seismic event control device (153) is further configured to
obtain feedback information, in particular a proxy signal, of a turbine load, and
apply the feedback information for the actuation.

12. A method of reducing seismic load acting on a wind turbine (100) during a seismic load causing event, wherein the wind turbine (100) comprises a tower (120) and a wind rotor (110), which is arranged at a top portion of the tower (120) and which comprises at least one blade (114), wherein the at least one blade (114) is arranged in a first blade pitch position, the method comprising:
obtaining an information indicative of a seismic load causing event; and
actuating the at least one blade (114) from the first blade pitch position to a second blade pitch position, being different from the first blade pitch position, to thereby reduce seismic load acting on the wind turbine (100); wherein a first blade edge resonant frequency of the first blade pitch position is closer to a dominant seismic event resonant frequency than a second blade edge resonant frequency of the second blade pitch position;
and/or
wherein the first blade pitch position is a non energy production position, and wherein the second blade pitch position is an energy production position.

13. The method according to claim 12, wherein the method comprises:
keeping the at least one blade (114) in the second blade position to anticipate upcoming seismic events.

## Patentansprüche

1. Windkraftanlage (100), umfassend:
einen Turm (120);
einen Windrotor (110), der an einem oberen Abschnitt des Turms (120) angeordnet ist und der mindestens ein Blatt (114) umfasst, wobei das mindestens eine Blatt (114) in einer ersten Blattwinkelposition angeordnet ist; und
eine Vorrichtung (153) zum Steuern bei einem seismischen Ereignis, dafür gestaltet, das mindestens eine Blatt (114) von der ersten Blattwinkelposition in eine zweite Blattwinkelposition, die sich von der ersten Blattwinkelposition unterscheidet, zu verstellen, um die seismische Last zu verringern, die auf die Windkraftanlage (100) wirkt;
wobei eine erste Blattrand-Resonanzfrequenz der ersten Blattwinkelposition näher bei einer Hauptresonanzfrequenz des seismischen Ereignisses liegt als eine zweite Blattrand-Resonanzfrequenz der zweiten Blattwinkelposition,
und/oder
wobei die erste Blattwinkelposition eine Position ohne Energieproduktion ist und wobei die zweite Blattwinkelposition eine Position der Energieproduktion ist.

2. Windkraftanlage (100) nach Anspruch 1,
wobei die erste Blattwinkelposition die Fahnenposition oder Leerlaufposition ist.

3. Windkraftanlage (100) nach einem der vorhergehenden Ansprüche,
wobei die erste Blattwinkelposition durch einen ersten Blattwinkel definiert ist,
wobei die zweite Blattwinkelposition durch einen zweiten Blattwinkel definiert ist und
wobei das Verstellen des Blattwinkels des mindestens einen Blattes (114) Folgendes umfasst:
Drehen des mindestens einen Blattes (114) um eine Achse, die im Wesentlichen parallel zu der Längsausdehnung des mindestens einen Blattes (114) ausgerichtet ist.

4. Windkraftanlage (100) nach einem der vorhergehenden Ansprüche,
wobei die zweite Blattposition vorgegeben ist.

5. Windkraftanlage (100) nach einem der Ansprüche 1 bis 3, wobei die zweite Blattposition dynamisch eingestellt wird.

6. Windkraftanlage (100) nach einem der vorhergehenden Ansprüche,
wobei die Windkraftanlage (100) zwei oder mehr, insbesondere exakt drei, Blätter (114) umfasst und
wobei die Vorrichtung (153) zum Steuern bei einem seismischen Ereignis dafür gestaltet ist, die entsprechenden Blattwinkel der zwei oder mehr Blätter (114) gemeinsam oder einzeln zu verstellen.

7. Windkraftanlage (100) nach einem der vorhergehenden Ansprüche, wobei die Vorrichtung (153) zum Steuern bei einem seismischen Ereignis für Folgendes gestaltet ist:
Gewinnen von Informationen, die ein seismisches Ereignis angeben, insbesondere vor dem Verstellen des mindestens einen Blattes (114).

8. Windkraftanlage (100) nach den vorhergehenden Ansprüchen, wobei die Windkraftanlage (100) ferner einen Detektor für seismische Ereignisse umfasst, um die Informationen zu erkennen, die ein seismisches Ereignis angeben, und/oder wobei die Windkraftanlage (100) dafür gestaltet ist, die Informationen, die ein seismisches Ereignis angeben, von einem externen Detektor für seismische Ereignisse zu gewinnen.

9. Windkraftanlage (100) nach einem der vorhergehenden Ansprüche, wobei die Windkraftanlage (100) ferner eine Notstromversorgung umfasst.

10. Windkraftanlage (100) nach einem der vorhergehenden Ansprüche, wobei die Vorrichtung (153) zum Steuern bei einem seismischen Ereignis ferner für Folgendes gestaltet ist:
Gewinnen von Informationen, die Bodeneigenschaften angeben, und Korrelieren der Informationen, die Bodeneigenschaften angeben, mit entsprechenden Blattwinkelpositionen, insbesondere basierend auf Betriebsdaten, und
Anwenden der Korrelationsinformationen auf das Verstellen.

11. Windkraftanlage (100) nach einem der vorhergehenden Ansprüche, wobei die Vorrichtung (153) zum Steuern bei einem seismischen Ereignis ferner für Folgendes gestaltet ist:
Gewinnen von Rückmeldungsinformationen, insbesondere eines Proxy-Signals, zu einer Kraftanlagenlast und
Anwenden der Korrelationsinformationen auf das Verstellen.

12. Verfahren zum Verringern seismischer Last, die während eines Ereignisses, das seismische Last verursacht, auf eine Windkraftanlage (100) wirkt, wobei die Windkraftanlage (100) einen Turm (120) und einen Windrotor (110) umfasst, der an einem oberen Abschnitt des Turms (120) angeordnet ist und der mindestens ein Blatt (114) umfasst, wobei das mindestens eine Blatt (114) in einer ersten Blattwinkelposition angeordnet ist, und wobei das Verfahren Folgendes umfasst:
Gewinnen von Informationen, die ein Ereignis, das seismische Last verursacht, angeben; und
Verstellen des mindestens einen Blattes (114) von der ersten Blattwinkelposition in eine zweite Blattwinkelposition, die sich von der ersten Blattwinkelposition unterscheidet, um dadurch die seismische Last zu verringern, die auf die Windkraftanlage (100) wirkt;
wobei eine erste Blattrand-Resonanzfrequenz der ersten Blattwinkelposition näher bei einer Hauptresonanzfrequenz des seismischen Ereignisses liegt als eine zweite Blattrand-Resonanzfrequenz der zweiten Blattwinkelposition,
und/oder
wobei die erste Blattwinkelposition eine Position ohne Energieproduktion ist und wobei die zweite Blattwinkelposition eine Position der Energieproduktion ist.

13. Verfahren nach Anspruch 12, wobei das Verfahren Folgendes umfasst:
Halten des mindestens einen Blattes (114) in der zweiten Blattposition in Erwartung bevorstehender seismischer Ereignisse.

## Revendications

1. Éolienne (100) comprenant :
une tour (120) ;
un rotor éolien (110), qui est agencé au niveau d'une partie supérieure de la tour (120) et qui comprend au moins une pale (114), dans laquelle l'au moins une pale (114) est agencée dans une première position de pas de pale ; et
un dispositif de commande d'événement sismique (153), configuré pour actionner l'au moins une pale (114) de la première position de pas de pale à une seconde position de pas de pale, qui est différente de la première position de pas de pale, afin de réduire la charge sismique agissant sur l'éolienne (100) ;
dans laquelle une première fréquence de résonance de bord de pale de la première position de pas de pale est plus proche d'une fréquence de résonance d'événement sismique dominant qu'une seconde fréquence de résonance de bord de pale de la seconde position de pas de pale ;
et/ou
dans laquelle la première position de pas de pale est une position de non-production d'énergie, et dans laquelle la seconde position de pas de pale est une position de production d'énergie.

2. Éolienne (100) selon la revendication 1,
dans laquelle la première position de pas de pale est la position de mise en drapeau ou la position de ralenti.

3. Éolienne (100) selon l'une quelconque des revendications précédentes,
dans laquelle la première position de pas de pale est définie par un premier angle de pas de pale,
dans laquelle la seconde position de pas de pale est définie par un second angle de pas de pale, et
dans laquelle l'actionnement de l'angle de pas de pale de l'au moins une pale (114) comprend :
la rotation de l'au moins une pale (114) autour d'un axe qui est aligné de manière sensiblement parallèle à l'extension longitudinale de l'au moins une pale (114).

4. Éolienne (100) selon l'une quelconque des revendications précédentes,
dans laquelle la seconde position de pale est prédéterminée.

5. Éolienne (100) selon l'une quelconque des revendications 1 à 3,
dans laquelle la seconde position de pale est réglée dynamiquement.

6. Éolienne (100) selon l'une quelconque des revendications précédentes,
dans laquelle l'éolienne (100) comprend deux ou plus pales (114), en particulier exactement trois, et
dans laquelle le dispositif de commande d'événement sismique (153) est configuré pour actionner les angles de pas de pale respectifs des deux ou plus pales (114) collectivement ou individuellement.

7. Éolienne (100) selon l'une quelconque des revendications précédentes, dans laquelle le dispositif de commande d'événement sismique (153) est configuré pour
obtenir une information indiquant un événement sismique, notamment avant d'actionner l'au moins une pale (114).

8. Éolienne (100) selon les revendications précédentes,
dans laquelle l'éolienne (100) comprend en outre un détecteur d'événement sismique pour détecter les informations indiquant un événement sismique ; et/ou
dans laquelle l'éolienne (100) est configurée pour obtenir l'information indiquant un événement sismique à partir d'un détecteur d'événement sismique externe.

9. Éolienne (100) selon l'une quelconque des revendications précédentes, dans laquelle l'éolienne (100) comprend en outre une alimentation électrique de secours.

10. Éolienne (100) selon l'une quelconque des revendications précédentes, dans laquelle le dispositif de commande d'événement sismique (153) est en outre configuré pour
obtenir des informations indiquant des propriétés du sol, et corréler les informations indiquant les propriétés du sol avec les positions de pas de pale respectives, en particulier sur la base de données opérationnelles, et
appliquer les informations de corrélation pour l'actionnement.

11. Éolienne (100) selon l'une quelconque des revendications précédentes, dans laquelle le dispositif de commande d'événement sismique (153) est en outre configuré pour
obtenir des informations de rétroaction, en particulier un signal proxy, d'une charge de turbine, et
appliquer les informations de rétroaction pour l'actionnement.

12. Procédé de réduction d'une charge sismique agissant sur une éolienne (100) lors d'un événement provoquant une charge sismique, dans lequel l'éolienne (100) comprend une tour (120) et un rotor éolien (110), qui est agencé au niveau d'une partie supérieure de la tour (120) et qui comprend au moins une pale (114), dans lequel l'au moins une pale (114) est agencée dans une première position de pas de pale, le procédé comprenant :
obtenir une information indiquant un événement provoquant une charge sismique ; et
actionner l'au moins une pale (114) de la première position de pas de pale à une seconde position de pas de pale, qui est différente de la première position de pas de pale, pour ainsi réduire la charge sismique agissant sur l'éolienne (100) ;
dans lequel une première fréquence de résonance de bord de pale de la première position de pas de pale est plus proche d'une fréquence de résonance d'événement sismique dominant qu'une seconde fréquence de résonance de bord de pale de la seconde position de pas de pale ;
et/ou
dans lequel la première position de pas de pale est une position de non-production d'énergie, et dans lequel la seconde position de pas de pale est une position de production d'énergie.

13. Procédé selon la revendication 12, dans lequel le procédé comprend :
maintenir l'au moins une pale (114) dans la seconde position de pale pour anticiper les événements sismiques à venir.
